(19) **Europäisches Patentamt European Patent Office Office européen des brevets**

(11) **EP 3 598 385 B1**

(12) **EUROPEAN PATENT SPECIFICATION**

(45) Date of publication and mention of the grant of the patent:
**16.06.2021 Bulletin 2021/24**

(51) Int Cl.:
*G06T 5/00* (2006.01)  *G06T 5/50* (2006.01)

(21) Application number: **17923783.9**

(22) Date of filing: **19.12.2017**

(86) International application number:
**PCT/CN2017/117166**

(87) International publication number:
**WO 2019/041660 (07.03.2019 Gazette 2019/10)**

(54) **FACE DEBLURRING METHOD AND DEVICE**

GESICHTSUNSCHÄRFEENTFERNUNGSVERFAHREN UND -VORRICHTUNG

PROCÉDÉ ET DISPOSITIF DE CORRECTION DE FLOU DE VISAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2017 CN 201710774351**

(43) Date of publication of application:
**22.01.2020 Bulletin 2020/04**

(73) Proprietor: **Suzhou Keda Technology Co., Ltd.**
**Suzhou, Jiangsu 215011 (CN)**

(72) Inventors:
• **JIN, Zhaolong**
  **Suzhou**
  **Jiangsu 215011 (CN)**
• **WANG, Guozhong**
  **Suzhou**
  **Jiangsu 215011 (CN)**
• **CHEN, Weidong**
  **Suzhou**
  **Jiangsu 215011 (CN)**

(74) Representative: **Lavoix**
**Bayerstraße 83**
**80335 München (DE)**

(56) References cited:
**WO-A1-2017/131343  CN-A- 104 484 803**
**CN-A- 105 678 252  CN-A- 107 563 978**

• QU CHENGCHAO ET AL: "3D vs. 2D: On the Importance of Registration for Hallucinating Faces Under Unconstrained Poses", 2015 12TH CONFERENCE ON COMPUTER AND ROBOT VISION, IEEE, 3 June 2015 (2015-06-03), pages 139-146, XP033177436, DOI: 10.1109/CRV.2015.26 [retrieved on 2015-07-14]
• VINH NGUYEN ET AL: "Super resolution face image based on locally linear embedding and local correlation", ACM SIGAPP APPLIED COMPUTING REVIEW, ACM, 2 PENN PLAZA, SUITE 701 NEW YORK NY 10121-0701 USA, vol. 15, no. 1, 27 March 2015 (2015-03-27), pages 17-25, XP058067402, ISSN: 1559-6915, DOI: 10.1145/2753060.2753062
• MA X ET AL: "Hallucinating face by position-patch", PATTERN RECOGNITION, ELSEVIER, GB, vol. 43, no. 6, 1 June 2010 (2010-06-01), pages 2224-2236, XP026917142, ISSN: 0031-3203, DOI: 10.1016/J.PATCOG.2009.12.019 [retrieved on 2010-02-20]
• BLANZ V ET AL: "Face recognition based on fitting a 3D morphable model", IEEE TRANSACTIONS ON PATTERN ANALYSIS AND MACHINE INTELLIGENCE, IEEE COMPUTER SOCIETY, USA, vol. 25, no. 9, 1 September 2003 (2003-09-01), pages 1063-1074, XP011100733, ISSN: 0162-8828, DOI: 10.1109/TPAMI.2003.1227983

- **SUHAIL HAMDAN ET AL: "Example-based face image super-resolution taking into consideration correspondence of facial parts", IEEJ TRANSACTIONS ON ELECTRICAL AND ELECTRONIC ENGINEERING, vol. 12, no. 6, 18 July 2017 (2017-07-18), pages 917-924, XP055666710, US ISSN: 1931-4973, DOI: 10.1002/tee.22483**

## Description

## TECHNICAL FIELD

The present application relates to the field of image processing technology, specifically to a face deblurring method and device.

## BACKGROUND

During the capturing of face images, as a typical phenomenon, the captured image tends to have brightness imbalance or blurring, which will have a great impact on image quality. Particularly, with the popularization of intelligent terminals and handheld devices without stabilizers, it has become more and more common for images and videos photographed to contain blurry parts. There are many factors affecting the clarity of the images, such as jitters, inaccurate focus, overexposure or uneven exposure, and relative movement between the camera and the scene during the shooting, all of which bring down the quality of the image, a process also referred to as image degradation.

However, the poor quality of the image will bring great inconvenience to public security officers and criminal investigators, because during tracking and identification of suspects in handling a case, the criminal investigators rely heavily on manual screening of monitoring videos at various spots, or employ a facial recognition system for face comparison. However, the video surveillance construction at various spots is often at different stages, leading to the shortage of scenes in some places, and poor image quality somewhere else, for example, in some cases of video surveillance, there are problems of coverage, blurs or overdue postures during face imaging.

Therefore, in prior art, in order to solve the above technical problem, the blurred region is first extracted from a face image to be processed, and then processed by relative algorithms to recover an implicit clear image from the blurred image.

However, in the above technical solution, it is necessary to detect the blurred region contained in the blurred image as accurately as possible, and then restore the clear image corresponding to the blurred region from the blurred image itself, resulting in poor effect of the deblurring method.

Document QU CHENGCHAO ET AL., "3D vs. 2D: On the importance of registration for hallucinating faces under unconstrained poses", 2015 12th conference on computer and robotic vision, IEEE, 3 June 2015, pages 139-146, XP033177436 discloses a method to inversely map a high-resolution 3D training texture to a low resolution 2D test image in arbitrary poses.

## SUMMARY

To this end, embodiments of the present invention provide a face deblurring method and device, so as to solve the problem of poor deblurring effect of a face image in the prior art.

A first aspect of the present invention provides a face deblurring method, as defined in claim 1.

Optionally, matching each grid of the divided face image to be processed 3 with a grid of a first grid dictionary so as to obtain a plurality of blurred grids corresponding to each grid of the face image to be processed comprises the following steps:

acquiring pixels of each grid of the face image to be processed and each grid of the first grid dictionary, respectively;
calculating an Euclidean distance of pixels between each grid of the face image to be processed and each grid of the first grid dictionary, respectively, according to the acquired pixels; and
acquiring M blurred grids matched with each grid of the face image to be processed according to the calculated Euclidean distance.

Optionally, querying in a second grid dictionary a plurality of clear grids corresponding to the plurality of blurred grids on a one to one basis, according to the blurred grids, comprises the following steps:

acquiring coordinates of the blurred grids on the face mask; and
querying the clear grids corresponding with the blurred grids in the second grid dictionary according to the coordinates.

Optionally, deblurring grids of the face image to be processed according to the clear grids comprises the following steps:

acquiring pixels of the clear grids; and
processing grids of the face image to be processed, so that the pixels of each grid of the face image to be processed is the sum of the pixels of the plurality of clear grids.

Optionally, the face deblurring method comprises the following steps before acquiring the face image to be processed:

acquiring the first three-dimensional image library and the second three-dimensional image library obtained via the three-dimensional reconstruction method
allocating posture parameters of the face image to be processed; and
constructing the corresponding first two-dimensional image library and second two-dimensional image library in the first three-dimensional image library and the second three-dimensional image library respectively, according to the posture parameters.

Optionally, the posture parameters are angles $(\theta_x, \theta_y, \theta_z)$ of the face image to be processed in three-dimensional space;

wherein, $\theta_x$ is an offset angle of the face image to be processed in an x direction, $\theta_y$ is an offset angle of the face image to be processed in a y direction, and $\theta_z$ is an offset angle of the face image to be processed in a z direction.

A second aspect of the present invention provides a face deblurring device, as defined in claim 7.

Optionally, the matching unit comprises:

a second acquisition unit, for acquiring pixels of each grid of the face image to be processed and each grid of the first grid dictionary, respectively;

a calculation unit, for calculating an Euclidean distance of pixels between each grid of the face image to be processed and each grid of the first grid dictionary, respectively, according to the acquired pixels; and

a third acquisition unit, for acquiring M blurred grids matched with each grid of the face image to be processed according to the calculated Euclidean distance.

A third aspect of the present invention provides an image processing device, comprising at least one processor; and memory in communication connection with the at least one processor; wherein, the memory stores instructions executable by the one processor, and the instructions are executed by the at least one processor, so that the at least one processor executes the face deblurring method in any manner of the first aspect of the present invention.

A fourth aspect of the present invention provides a non-transient computer readable storage medium which stores computer instruction used to allow a computer to execute the face deblurring method in the first aspect or any optional manner of the first aspect.

The technical solutions provided by the present invention have the following advantages.

The face deblurring method provided by the embodiments of the present invention comprises the following steps: acquiring a face image to be processed; aligning the face image to be processed onto a face mask, and performing grid division on the same; matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method; querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis; and generating a clear image of the face image to be processed according to the queried clear grids. The face deblurring method provided by the embodiments of the present invention is capable of processing face images with different postures with good face deblurring effect.

In the face deblurring method provided by the embodiments of the present invention, wherein, deblurring grids of the face image to be processed according to the clear grids comprises the following steps: acquiring pixels of the clear grids; and processing grids of the face image to be processed, so that the pixels of each grid of the face image to be processed is the sum of the pixels of the plurality of clear grids. In the embodiments of the present invention, during the process of replacing the blurred grids with the clear grids, with respect to the grid pixels at fixed positions, the grid pixels obtained by weighting of grid pixels at the same position of a face with different clarities are chosen to replace the blurred grid pixels, which brings about good face deblurring effect.

The face deblurring method provided by the embodiments of the present invention comprises the following steps before acquiring the face image to be processed: acquiring the first three-dimensional image library and the second three-dimensional image library obtained via the three-dimensional reconstruction method, and the first three-dimensional image library and the second three-dimensional image library are respectively a two-dimensional cylindrical exploded view of several blurred images and corresponding clear images; allocating posture parameters of the face image to be processed; and constructing the corresponding first two-dimensional image library and second two-dimensional image library in the first three-dimensional image library and the second three-dimensional image library respectively, according to the posture parameters. The face deblurring method provided by the embodiments of the present invention is able to set posture parameters of the face image to be processed in the space according to a user, so as to acquire a two-dimensional image dictionary under corresponding posture parameters from a histogram dictionary, and is thus able to perform face deblurring with certain postures in a video surveillance scene.

The face deblurring device provided by this embodiment comprises: a first acquisition unit, for acquiring a face image to be processed; a division unit, for aligning the face image to be processed onto a face mask, and performing grid division on the same; a matching unit, for matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method; a querying unit, for querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis; and a processing unit, for generating a clear image of the face image to be processed according to the queried clear grids. The face deblurring device provided by embodiments of the present invention is able to process face images with different postures, delivering good face deblurring effect.

## BRIEF DESCRIPTION OF THE DRAWINGS

The features and advantages of the present invention will be understood more clearly in conjunction with the drawings, and the drawings are illustrative rather than restricted on the present invention, in the drawings:

FIG.1 shows a diagram where a face facing the front turns to other postures during three-dimensional face reconstruction;

FIG.2 shows a three-dimensional shape model of a face;

FIG.3 shows a two-dimensional cylindrical exploded view with three-dimensional face texture;

FIG.4 shows a specifically illustrated flowchart of a face deblurring method in embodiment 1 of the present invention;

FIG.5 shows a specifically illustrated flowchart of a face deblurring method in embodiment 2 of the present invention;

FIG.6 shows a specifically illustrated flowchart of a face deblurring method in embodiment 3 of the present invention;

FIG.7 shows a specifically illustrated structural diagram of a face deblurring method in embodiment 4 of the present invention;

FIG.8 shows another specifically illustrated structural diagram of a face deblurring method in embodiment 4 of the present invention;

FIG.9 shows a specifically illustrated structural diagram of a face deblurring method in embodiment 5 of the present invention.

## DETAILED DESCRIPTION

In order to make the purpose, technical solutions and advantages in embodiments of the present invention clearer, the technical solutions in the embodiments of the present invention will be described as follows clearly and completely referring to figures accompanying the embodiments of the present invention, and certainly, the described embodiments are just part rather than all embodiments of the present invention. Based on the embodiments of the present invention, all the other embodiments acquired by those skilled in the art without delivering creative efforts shall fall into the protection scope of the present invention.

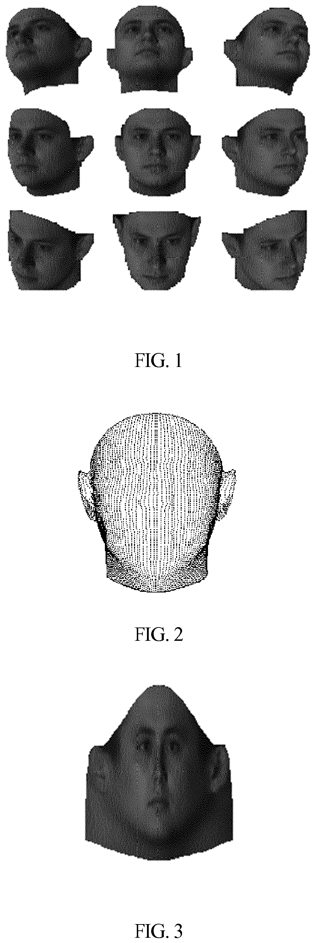

In the embodiments of the present invention, the three-dimensional face reconstruction is performed by turning a frontal face image to a face image with any other angles using a three-dimensional face model, specifically shown as FIG.1, i.e., a face image with corresponding postures can be obtained for a frontal face image as long as posture parameters are given. The three-dimensional face model comprises information in the following four aspects:

a three-dimensional shape of a frontal face $S = (x_1, y_1, z_1,..., x_n, y_n, z_n)^T$, wherein n indicates the number of shape vertexes;
three-dimensional texture of a frontal face $T=(r_1, g_1, b_1,..., r_m, g_m, b_m)^T$, wherein m indicates the number of pixels of a texture image;
the correspondence of the shape vertexes of the frontal face to the texture image, that is, each shape point of the two-dimensional shape can correspond to a texture pixel value, as shown by the three-dimensional shape model of a demonstrative face in FIG.2;
pixel values of other shape points that are not in the model are obtained by pixel interpolation of surrounding shape vertexes in the model.

For any two-dimensional frontal face image, the process of reconstructing a face with any angle from a frontal face is as follows:

Step 1: using ASM to locate 68 face key points;
Step2: aligning the current face two-dimensional shape onto the three-dimensional shape of the model using the 68 key points, because the rotation angle in the Z direction is 0 for the frontal face, parameters $(\theta_x, \theta_y, \theta_z, \Delta x, \Delta y, \Delta z, s)$ are needed, wherein, $\theta_x, \theta_x, \theta_z$ respectively indicate rotation angles in the x, y, z directions, $\Delta x, \Delta y, \Delta z$ respectively indicate translations in the x, y, z directions, and s indicates a zoom factor;

Step 3: performing rotation, translation and zooming to each vertex of the above shape S using the rotation, translation and zoom parameters calculated in Step 2, i.e., aligning the current shape onto a standard shape in the model;

Step 4: finally obtaining the two-dimensional cylindrical exploded view of a complete three-dimensional face texture diagram as shown in FIG. 3 using the information in Step (2) and Step (3) combining the Kriging interpolation;

Step 5: when a user inputs rotation angle parameter $(\theta_x, \theta_y, \theta_z)$ of a current frontal face, rotating the shape vertexes after alignment (a reverse process of Step 2); and

Step 6: according to the parameters calculated in Step 5, obtaining a target image via Kriging interpolation combining the two-dimensional cylindrical exploded view of the three-dimensional face texture diagram generated in Step 4.

It only needs to construct a three-dimensional texture image library of multiple faces when three-dimensional face reconstruction is introduced to perform face processing of any postures. When setting the posture parameters, a customer can perform variation to obtain a two-dimensional texture image library of this posture, and online training of different face processing models using the two-dimensional texture image library can allow different image processing of any posture.

**Embodiment 1**

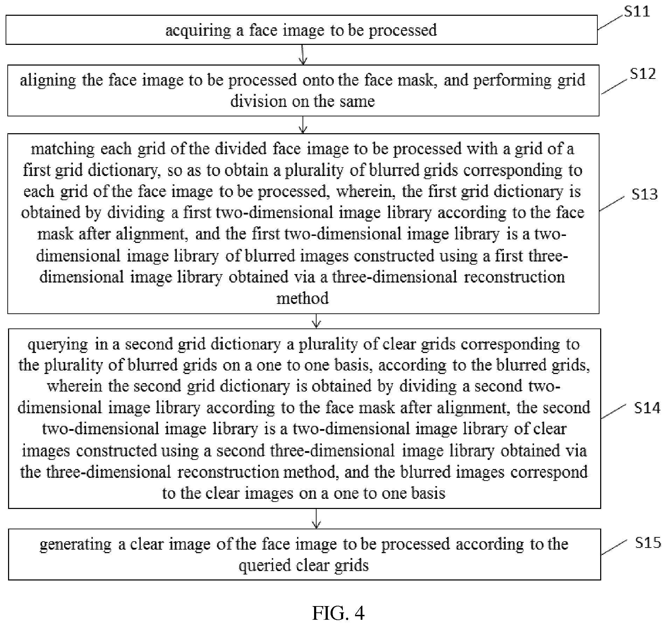

This embodiment provides a face deblurring method used in a face deblurring device. As shown in FIG. 4, the face deblurring method comprises the following steps:

Step S11, acquiring a face image to be processed.

The face image in this embodiment can be an image stored in a face deblurring device in advance, or an image acquired by the face deblurring device from the outside in real time, or an image extracted by the face deblurring device from a video.

Step S12, aligning the face image to be processed onto the face mask, and performing grid division on the same.

Because the face have a relatively fixed structure, such as eyebrows, eyes, nose, mouth, which have little difference if taken alone, and the difference is much more minute, if the organs are divided into many textures and pieces. Based on this, a face image is divided into small grids, and each organ is composed of a plurality of grids in the embodiments of the present invention.

The face mask in this embodiment serves as a reference for dividing the face image to be processed. When performing grid division to the face image to be processed, the face image to be processed is subjected to alignment of five facial organs and size normalization, i.e., the eyes, eyebrows, nose, and mouth are generally at the same position as the corresponding organs of the face mask, thus ensuring the standardization and accuracy of the division.

In this embodiment, the face image to be processed can be divided into grids of m rows and n columns, where m is the number of grids in the vertical direction, and n is the number of grids in the horizontal direction. The specific value of m and n can be set according to the accuracy of the face image to be processed after the actual processing, and can be equal or unequal.

Step S13, matching each grid of the divided face image to be processed with a grid of a first grid dictionary, so as to obtain a plurality of blurred grids corresponding to each grid of the face image to be processed, wherein, the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method.

In this embodiment, the first three-dimensional image library is a face dictionary library of blurred images of S faces, i.e., the above three-dimensional face reconstruction method is used to obtain a two-dimensional cylindrical exploded view of corresponding blurred images; and a first two-dimensional image library can be extracted from the two-dimensional cylindrical exploded view according to a deflection angle of the face image to be processed relative to a frontal image. The first grid dictionary is obtained by dividing the first two-dimensional image library according to the face mask after alignment; wherein, the blurred images of S faces are subjected to alignment of five facial organs and size normalization, i.e., the eyes, eyebrows, nose, and mouth of each face are generally at the same position in the image, so that the grids of the first grid dictionary have the same coordinates as the grids of the face image to be processed at corresponding positions on the face mask.

In this embodiment, it improves the matching accuracy, thus the resolution of the face image to be processed after the processing, by matching the plurality of blurred grids of the first grid dictionary with one grid of the face image to be processed.

Step S14, querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis.

In this embodiment, the second three-dimensional image library is a face dictionary library of clear images of S faces, i.e., a two-dimensional cylindrical exploded view of corresponding clear images are obtained using the above three-dimensional face reconstruction method; a second two-dimensional image library may be extracted from the two-dimensional cylindrical exploded view according to the deflection angle of the face image to be processed relative to the frontal image. The second grid dictionary is obtained by dividing a second two-dimensional image library according to the face mask after alignment, i.e., the grids of the first grid dictionary, the second grid dictionary and the face image to be processed at corresponding positions have the same coordinates on the face mask.

With the same coordinates at corresponding positions of the three, it is convenient to query in the second grid dictionary a plurality of clear grids corresponding to the plurality of blurred grids on a one to one basis.

It should be noted that, in the embodiment of the present invention, the blurred image, clear image and the blurred grids and clear grids mentioned below are relative terms, for example, the clear image indicates an image capable of being quickly recognized by the human eye, which can be specifically defined by some image parameters (for example, pixels), and this also applies to a blurred image.

Step S15, generating a clear image of the face image to be processed according to the queried clear grids.

In this embodiment, the queried clear grids may be used to directly replace the grids in the face image to be processed, alternatively, pixels of the queried clear grids after processing may be used to replace the grid pixels of the face image to be processed.

**Embodiment 2**

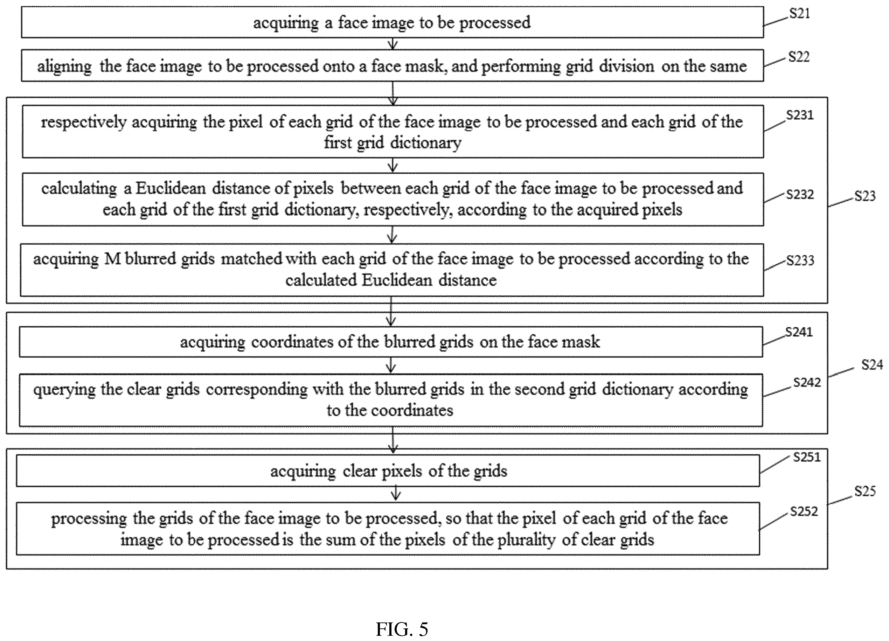

This embodiment provides a face deblurring method used in a face deblurring device. As shown in FIG. 5, the face deblurring method comprises the following steps:

Step S21, acquiring a face image to be processed. This step is the same as Step S11 in embodiment 1 and will not be repeated.

Step S22, aligning the face image to be processed onto a face mask, and performing grid division on the same. The step is the same as Step S12 in embodiment 1, and will not be repeated.

Step S23, matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method.

In this embodiment, a Euclidean distance of pixels between the grid of the face image to be processed and the grid of the first grid dictionary is calculated, and grids in the first grid dictionary are located to match with the grids of the face image to be processed according to the Euclidean distance.

In an alternative implementation of this embodiment, Step S23 specifically comprises the following steps:

Step S231, respectively acquiring the pixel of each grid of the face image to be processed and each grid of the first grid dictionary.

In this embodiment, the pixel of the grid of the face image to be processed and the pixel of the grid of a first grid dictionary may be obtained by summing up and averaging the value of all pixels of each grid; furthermore, with alignment onto the face mask for grid division, the face image to be processed and the first grid dictionary have the same number of divided grids, which is indicated as N; each grid has the same number of pixels, allowing the use of a pixel vector composed of all pixels in the grid to indicate the pixel of the grid, that is, the pixel of the grid of the face image to be processed is annotated as $\vec{y_t}$, wherein, t is a $t^{th}$ grid of the face image to be processed, t=1 to N; the pixel of the grid of the first grid dictionary is annotated as $\vec{y_i}$, wherein, I is an $i^{th}$ grid in the first grid dictionary, and i=1 to N.

In an alternative implementation of this embodiment, the pixel of the grid of the face image to be processed and the pixel of the grid of the first grid dictionary are indicated with a pixel vector composed of all pixels in the grid.

Step S232, calculating an Euclidean distance of pixels between each grid of the face image to be processed and each grid of the first grid dictionary, respectively, according to the acquired pixels.

In this embodiment, an Euclidean distance of pixels between each grid of the face image to be processed and each grid of the first grid dictionary is calculated, the calculated distances are ranked, and M grids in the first grid dictionary with the smallest distances are screened out, i.e., M blurred grids in the first grid dictionary corresponding to each grid of the face image to be processed are screened out. The value of M can be an arbitrary value between 10-20. In an alternative implementation of this embodiment, M=10, which can simplify the calculation while ensuring precise screening effect.

The Euclidean distance can be calculated with the following formula:

$$dist_i = \left\| \vec{y}_t - \vec{y}_i \right\|;$$

wherein, $\vec{y}_t$ is a $t^{th}$ pixel of the grid of the face image to be processed, $\vec{y}_i$ is an $i^{th}$ pixel of the grid of the first grid dictionary.

In this embodiment, the number of the grids of the face image to be processed is the same as the grids of the first grid dictionary, during calculation, when calculation is performed from t=1 to t=N, the corresponding Euclidean distance is:

when t=1, calculating $dist_i = \|\vec{y}_1 - \vec{y}_i\|$, i=1 to N; wherein, $\vec{y}_1$ is a first pixel of the grid of the face image to be processed;
when t=2, calculating $dist_i = \|\vec{y}_2 - \vec{y}_i\|$, i=1 to N; wherein, $\vec{y}_2$ is a second pixel of the grid of the face image to be processed;
when t=N, calculating $dist_i = \|\vec{y}_N - \vec{y}_i\|$, i=1 to N; wherein, $\vec{y}_N$ is an $N^{th}$ pixel of the grid of the face image to be processed.

Step S233, acquiring M blurred grids matched with each grid of the face image to be processed according to the calculated Euclidean distance.

In an alternative implementation of this embodiment, after calculating the Euclidean distance of pixels between each grid of the face image to be processed and each grid of the first grid dictionary, taking a reciprocal of the distance and ranking, and screening out M grids of the first grid dictionary with the greatest reciprocals.

In an alternative implementation of this embodiment, after calculating the Euclidean distance of pixels between each grid of the face image to be processed and each grid of the first grid dictionary, a reciprocal of the distance is calculated, a constant A is subtracted by the reciprocal and then ranked, and M grids of the first grid dictionary with the greatest subtraction result are screened out. In this embodiment, A=1, which can simplify the calculation while improving the deblurring accuracy of the face image.

Step S24, querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis.

In this embodiment, the grids of the first grid dictionary, the second grid dictionary and the face image to be processed at corresponding positions have the same coordinates on the face mask. As a result, in the first grid dictionary, after querying a plurality of blurred grids corresponding to the grids of the face image to be processed, querying may be performed in a second grid dictionary for a plurality of clear grids corresponding to the plurality of blurred grids on a one to one basis, according to the coordinates of the plurality of blurred grids.

In an alternative implementation of this embodiment, Step S24 specifically comprises the following steps:

Step S241, acquiring coordinates of the blurred grids on the face mask.

In this embodiment, each grid of the face image to be processed has M matched blurred grids in the first dictionary, and positions of the blurred grids on the face mask can be determined by sequentially acquiring coordinates of the M blurred grids on the face mask.

Step S242, querying the clear grids corresponding with the blurred grids in the second grid dictionary according to the coordinates.

In this embodiment, the grids of the first grid dictionary, the second grid dictionary and the face image to be processed at corresponding positions have the same coordinates on the face mask. As a result, the coordinates of the plurality of blurred grids corresponding to those of the plurality of clear grids in the second grid dictionary, thus the plurality of clear grids can be determined according to the coordinates.

Step S25, performing deblurring to the grids of the face image to be processed according to clear grids.

In this embodiment, after querying M clear grids corresponding to each grid of the face image to be processed in the second grid dictionary, and processing the M clear pixels of the grid, corresponding grids of the face image to be processed are replaced. And repeating the above operations to all grids of the face image to be processed can realize deblurring of the face image to be processed.

In an alternative implementation of this embodiment, Step S25 specifically comprises the following steps:

Step S251, acquiring clear pixels of the grids.

In this embodiment, the pixel of the grids in the second grid dictionary may be obtained by summing up and averaging all pixels of each grid; moreover, because of grid division after alignment onto the face mask, the face image to be processed, the first grid dictionary and the second grid dictionary have the same number of divided grids, which are indicated as N; each grid has the same number of pixels, allowing the use of a pixel vector composed of all pixels in the grid to indicate the pixel of the grid, that is, the pixel of the grids of the second grid dictionary is annotated as $\vec{y}_{ji}$, wherein j is a $j^{th}$ grid in the second grid dictionary, and j=1 to N.

In an alternative implementation of this embodiment, the pixel of the grids of the second grid dictionary is indicated by a pixel vector composed of all pixels in the grid, i.e., $\vec{y_j}$.

Step S252, processing the grids of the face image to be processed, so that the pixel of each grid of the face image to be processed is the sum of the pixels of the plurality of clear grids.

In this embodiment, the sum of the pixels of M clear grids corresponding to each grid of the face image to be processed is calculated, and corresponding pixel of the grids of the face image to be processed is replaced with the sum of the pixels of the M clear grids. Therefore, sequentially repeating the above operations to all grids of the face image to be processed can realize deblurring of the face image to be processed.

## Embodiment 3

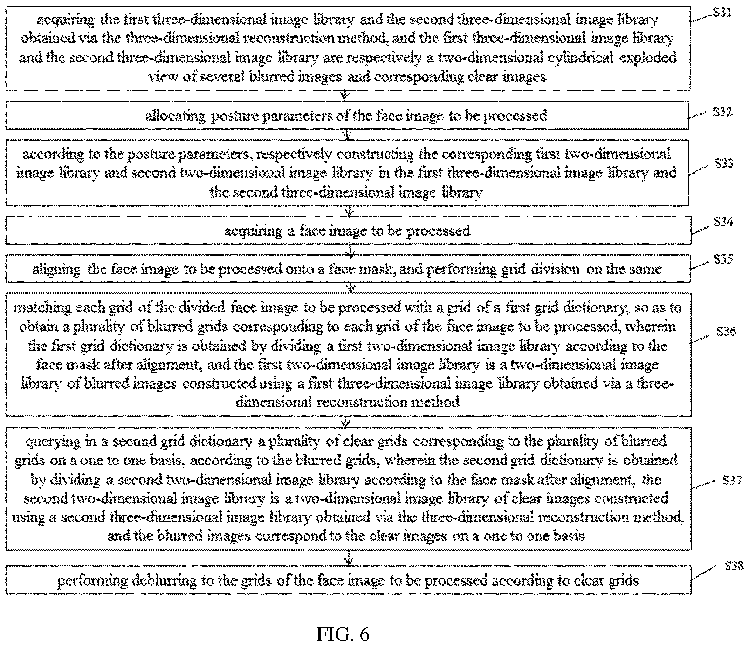

This embodiment provides a face deblurring method used in a face deblurring device. As shown in FIG. 6, the face deblurring method comprises the following steps:
Step S31, acquiring the first three-dimensional image library and the second three-dimensional image library obtained via the three-dimensional reconstruction method, and the first three-dimensional image library and the second three-dimensional image library are respectively a two-dimensional cylindrical exploded view of several blurred images and corresponding clear images.

Processing the several blurred images and a corresponding clear image respectively using the three-dimensional reconstruction method of the present invention, so as to obtain a two-dimensional cylindrical exploded view of the several blurred images and the corresponding clear image, i.e., the first three-dimensional image library and the second three-dimensional image library.

Step S32, allocating posture parameters of the face image to be processed.

In this embodiment, the posture parameters are angles $(\theta_x, \theta_y, \theta_z)$ of the face image to be processed in three-dimensional space; wherein, $\theta_x$ is an offset angle of the face image to be processed in an x direction, $\theta_y$ is an offset angle of the face image to be processed in a y direction, and $\theta_z$ is an offset angle of the face image to be processed in a z direction.

Step S33, according to the posture parameters, respectively constructing the corresponding first two-dimensional image library and second two-dimensional image library in the first three-dimensional image library and the second three-dimensional image library.

In this embodiment, a user sets corresponding posture parameters according to the angle of the face image to be processed in the three-dimensional space, so as to acquire the first two-dimensional image library under the corresponding posture parameters from the first three-dimensional image library, and to acquire the second two-dimensional image library under the corresponding posture parameters from the second three-dimensional image library.

Step S34, acquiring a face image to be processed. The step is the same as Step S21 in embodiment 2, and will not be repeated.

Step S35, aligning the face image to be processed onto a face mask, and performing grid division on the same. The step is the same as Step S22 in embodiment 2, and will not be repeated.

Step S36, matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method. The step is the same as Step S23 in embodiment 2, and will not be repeated.

Step S37, querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis. The step is the same as Step S24 in embodiment 2, and will not be repeated.

Step S38, performing deblurring to the grids of the face image to be processed according to clear grids. The step is the same as Step S25 in embodiment 2, and will not be repeated.

The face deblurring method provided by this embodiment can allow a user to set the posture parameters of a face image to be processed in the space, and to acquire a two-dimensional image dictionary under corresponding posture parameters in a histogram dictionary, and thus perform face deblurring in a video surveillance scene.

## Embodiment 4

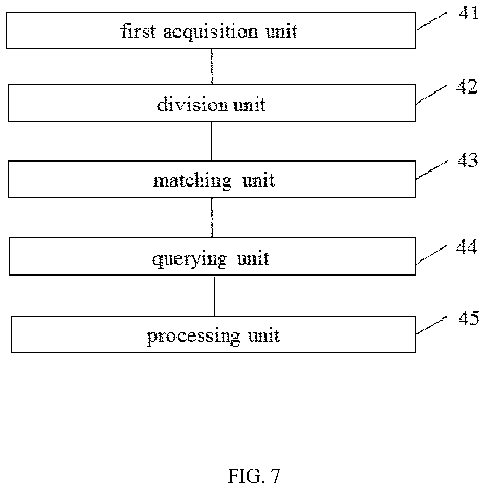

This embodiment provides a face deblurring device for executing the face deblurring method in embodiments 1 to 3 of the present invention. As shown in FIG. 7, the face deblurring device comprises:

a first acquisition unit 41, for acquiring a face image to be processed;

a division unit 42, for aligning the face image to be processed onto a face mask, and performing grid division on the same;

a matching unit 43, for matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method.

a querying unit 44, for querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis; and

a processing unit 45, for generating a clear image of the face image to be processed according to the queried clear grids.

The face deblurring device provided by this embodiment is able to process face images with different postures with good face deblurring effect.

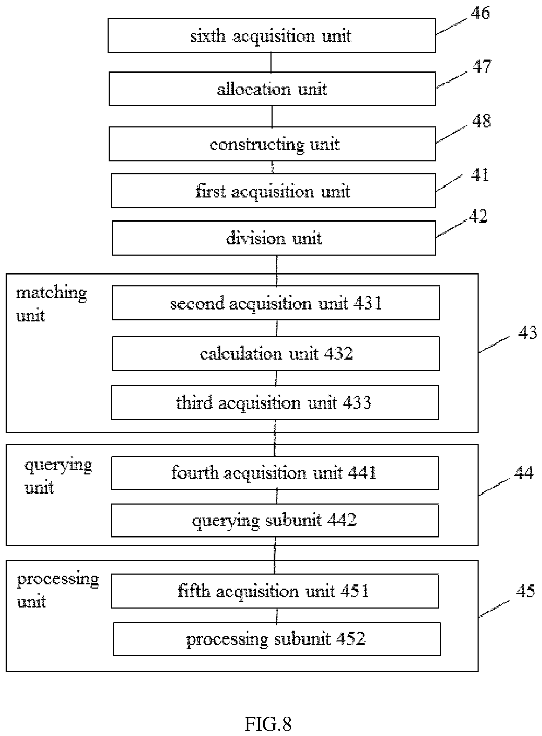

In an alternative implementation of this embodiment, as shown in FIG. 8, the matching unit 43 comprises:

a second acquisition unit 431, for acquiring pixels of each grid of the face image to be processed and each grid of the first grid dictionary, respectively;

a calculation unit 432, for calculating an Euclidean distance of degree of similarity of pixels between each grid of the face image to be processed and each grid of the first grid dictionary, respectively, according to the acquired pixels; and

a third acquisition unit 433, for acquiring M blurred grids matched with each grid of the face image to be processed according to the calculated Euclidean distance.

In an alternative implementation of this embodiment, as shown in FIG. 8, the querying unit 44 comprises:

a fourth acquisition unit 441, for acquiring coordinates of the blurred grids on the face mask; and

a querying subunit 442, for querying clear grids corresponding to the blurred grids in the second grid dictionary according to the coordinates.

In an alternative implementation of this embodiment, as shown in FIG. 8, the processing unit 45 comprises:

a fifth acquisition unit 451, for acquiring pixels of the clear grids.

a processing subunit 452, for processing grids of the face image to be processed, so that the pixels of each grid of the face image to be processed is a sum of the pixels of the plurality of clear grids.

In an alternative implementation of this embodiment, as shown in FIG. 8, the face deblurring device further comprises:

a sixth acquisition unit 46, for acquiring the first three-dimensional image library and the second three-dimensional image library obtained via the three-dimensional reconstruction method, and the first three-dimensional image library and the second three-dimensional image library are respectively a two-dimensional cylindrical exploded view of several blurred images and corresponding clear images;

an allocation unit 47, for allocating posture parameters of the face image to be processed; and

a constructing unit 48, for constructing the corresponding first two-dimensional image library and second two-dimensional image library in the first three-dimensional image library and the second three-dimensional image library respectively, according to the posture parameters.

**Embodiment 5**

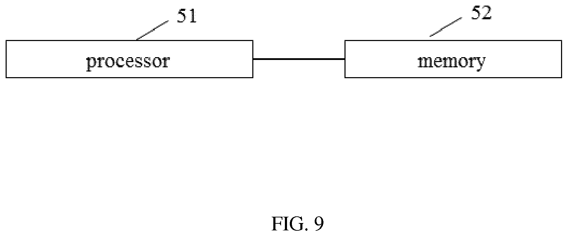

FIG. 9 is a hardware structural diagram for an image processing device provided by an embodiment of the present invention, as shown in FIG. 9, the device comprises one or more processors 51 and memory 52, and a processor 51 is taken as an example in FIG.9.

The image processing device may further comprise: an image display (not shown), for displaying processing results of the image in comparison. The processor 51, memory 52 and image display may be connected by a bus or other means, and as an example, are connected by a bus in FIG. 9.

The processor 51 may be a central processing unit (Central Processing Unit, CPU), and may also be other general-purpose processor, digital signal processor (Digital Signal Processor, DSP), application specific integrated circuit (Application Specific Integrated Circuit, ASIC), field-programmable gate array (Field-Programmable Gate Array, FPGA) or other programmable logic device, discrete gate or transistor logic device, discrete hardware components and other chips, or a combination of the above various types of chips. The general-purpose processor can be a microprocessor, or any conventional processors.

The memory 52 is a non-transient computer readable storage medium, which can be used for storing non-transitory software programs, non-transitory computer executable program and modules, such as program instructions/modules corresponding to face deblurring method in the embodiments of the present invention. By running the non-transit software programs, instructions and modules stored in the memory 52, the processor 51 performs various functions and applications and data processing of a server, i.e., implements the face deblurring method in the above embodiments.

The memory 52 can comprise a program storage area and a data storage area, wherein, the program storage area can store an operating system, and at least one application program needed by the functions. The data storage area can store the data created by the use of the face deblurring device. In addition, the memory 52 may comprise high-speed random access memory, and can also comprise non-transitory memory, for example, at least one disk storage device, flash device, or other non-transitory solid storage devices. In some embodiments, the memory 52 optionally comprises memory configured remotely relative to the processor 51, and the remote memory can be linked with the face deblurring device through networks. Examples of the above networks include but are not limited to the internet, corporate intranet, local area network, mobile communication network and combinations thereof.

The one or more modules are stored in the memory 52, and when executed by the one or more processor 51, execute the face deblurring method in any of embodiment 1 to embodiment 3.

The above products can execute the method provided in the embodiments of the present invention, and thus have functional modules and beneficial effects corresponding to the method to be executed. And please refer to relevant description of the embodiment shown in Figure 1 for those technical details not specifically described in this embodiment.

**Embodiment 6**

The embodiment of the present invention further provides a non-transitory computer storage medium storing computer executable instructions which may execute the face image deblurring method in any one of embodiments 1 to 3. The storage medium may be a disk, CD, read-only memory (Read-Only Memory, ROM), random access memory (Random Access Memory, RAM), flash memory (Flash Memory), hard disk drive (Hard Disk Drive, HDD), hard disk or solid-state drive (Solid-State Drive, SSD), etc.; the storage medium can also comprise a combination of the above types of memory.

Those skilled in the art can understand that, all or part of the process for implementing the method in the above embodiments can be completed by hardware under instructions from a computer program, and the program can be stored in a computer readable storage medium. When executed, the program may comprise the process in the embodiments of the method. The storage medium can be a disk, a compact disk, a read only memory (ROM) or a random access memory (RAM).

Although the embodiments of the invention are described in conjunction with drawings, those skilled in the art can make various modifications and variations without departing from the scope of the present invention. All such modifications and variations fall into the scope defined by the attached claims.

**Claims**

1. A face deblurring method, **characterized in** comprising the following steps:

   acquiring (S11) a face image to be processed;
   aligning (S12) the face image to be processed onto a face mask, and performing grid division on the same;
   matching (S13) each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method;
   querying (S14) in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis; and
   generating (S15) a clear image of the face image to be processed according to the queried clear grids,
   **characterized in that** the first three-dimensional image library and the second three-dimensional image library are respectively a two-dimensional cylindrical exploded view of several blurred images and corresponding clear images.

2. The face deblurring method according to claim 1, **characterized in that** matching each grid of the divided face image to be processed with a grid of a first grid dictionary so as to obtain a plurality of blurred grids corresponding to each grid of the face image to be processed comprises the following steps:

   acquiring pixels of each grid of the face image to be processed and each grid of the first grid dictionary, respectively;

   calculating an Euclidean distance of pixels between each grid of the face image to be processed and each grid of the first grid dictionary, respectively, according to the acquired pixels; and

   acquiring M blurred grids matched with each grid of the face image to be processed according to the calculated Euclidean distance.

3. The face deblurring method according to claim 1 or 2, **characterized in that** querying in a second grid dictionary a plurality of clear grids corresponding to the plurality of blurred grids on a one to one basis, according to the blurred grids, comprises the following steps:

   acquiring coordinates of the blurred grids on the face mask; and

   querying the clear grids corresponding with the blurred grids in the second grid dictionary according to the coordinates.

4. The face deblurring method according to any of claims 1-3, **characterized in that** deblurring grids of the face image to be processed according to the clear grids comprises the following steps:

   acquiring pixels of the clear grids; and

   processing grids of the face image to be processed, so as to cause the pixels of each grid of the face image to be processed to be the sum of the pixels of the plurality of clear grids.

5. The face deblurring method according to any of claims 1-4, **characterized in** comprising the following steps before acquiring the face image to be processed:

   acquiring the first three-dimensional image library and the second three-dimensional image library obtained via the three-dimensional reconstruction method;

   allocating posture parameters of the face image to be processed; and

   constructing the corresponding first two-dimensional image library and second two-dimensional image library in the first three-dimensional image library and the second three-dimensional image library respectively, according to the posture parameters.

6. The face deblurring method according to claim 5, **characterized in that** the posture parameters are angles ($\theta_x$, $\theta_y$, $\theta_z$) of the face image to be processed in three-dimensional space;

   wherein, $\theta_x$ is an offset angle of the face image to be processed in an x direction, $\theta_y$ is an offset angle of the face image to be processed in a y direction, and $\theta_z$ is an offset angle of the face image to be processed in a z direction.

7. A face deblurring device, **characterized in** comprising:

   a first acquisition unit (41), for acquiring a face image to be processed:

   a division unit (42), for aligning the face image to be processed onto a face mask, and performing grid division on the same;

   a matching unit (43), for matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method;

   a querying unit (44), for querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis, **characterized in that** the first three-dimensional image library and the second three-dimensional image library are respectively a two-dimensional cylindrical exploded view of several blurred images and corresponding clear images; and

   a processing unit (45), for generating a clear image of the face image to be processed according to the queried clear grids.

**8.** The face deblurring device according to claim 7, **characterized in that** the matching unit comprises:

> a second acquisition unit, for acquiring pixels of each grid of the face image to be processed and each grid of the first grid dictionary, respectively;
> a calculation unit, for calculating an Euclidean distance of pixels between each grid of the face image to be processed and each grid of the first grid dictionary, respectively, according to the acquired pixels; and
> a third acquisition unit, for acquiring M blurred grids matched with each grid of the face image to be processed according to the calculated Euclidean distance.

**9.** An image processing device, **characterized in** comprising
at least one processor; and
memory in communication connection with the at least one processor;
wherein, the memory stores instructions executable by the one processor, and the instructions are executed by the at least one processor, so that the at least one processor executes the face deblurring method in any of claims 1-6.

**10.** A non-transient computer readable storage medium, **characterized in that**,
the non-transient computer readable storage medium stores computer instruction used to cause a computer to execute the face deblurring method in any of claims 1-6.

**Patentansprüche**

**1.** Gesichtsentzerrungsverfahren, **dadurch gekennzeichnet, dass** es die folgenden Schritte umfasst:

> Erfassen (S11) eines zu verarbeitenden Gesichtsbilds;
> Ausrichten (S12) des zu verarbeitenden Gesichtsbilds auf eine Gesichtsmaske und Ausführen von Rasterteilung darüber;
> Abgleichen (S13) von jedem Raster des geteilten, zu verarbeitenden Gesichtsbilds mit einem Raster eines ersten Rasterwörterbuchs, um eine Vielzahl von verzerrten Rastern zu erlangen, die jedem Raster des zu verarbeitenden Gesichtsbilds entsprechen, wobei das erste Rasterwörterbuch erlangt wird, indem eine erste zweidimensionale Bildbibliothek gemäß der Gesichtsmaske nach Ausrichtung geteilt wird, und die erste zweidimensionale Bildbibliothek eine zweidimensionale Bildbibliothek von verzerrten Bildern ist, die unter Verwendung einer ersten dreidimensionalen Bildbibliothek aufgebaut wird, die über ein dreidimensionales Rekonstruktionsverfahren erlangt wird;
Abfragen (S14) in einem zweiten Rasterwörterbuch einer Vielzahl von klaren Rastern, die der Vielzahl von verzerrten Rastern auf einer Eins-zu-Eins-Basis entsprechen, gemäß den verzerrten Rastern, wobei das zweite Rasterwörterbuch durch Teilen einer zweiten zweidimensionalen Bildbibliothek gemäß der Gesichtsmaske nach Ausrichtung erlangt wird, die zweite zweidimensionale Bildbibliothek eine zweidimensionale Bildbibliothek von klaren Bildern ist, die unter Verwendung einer zweiten dreidimensionalen Bildbibliothek aufgebaut wird, die über das dreidimensionale Rekonstruktionsverfahren erlangt wird, und die verzerrten Bilder den klaren Bildern auf einer Eins-zu-Eins-Basis entsprechen; und
Erzeugen (S15) eines klaren Bilds des zu verarbeitenden Gesichtsbilds gemäß den abgefragten klaren Rastern,
**dadurch gekennzeichnet, dass** die erste dreidimensionale Bildbibliothek und die zweite dreidimensionale Bildbibliothek jeweils eine zweidimensionale zylindrische Explosionsansicht mehrerer verzerrter Bilder und entsprechender klarer Bilder sind.

**2.** Gesichtsentzerrungsverfahren nach Anspruch 1, **dadurch gekennzeichnet, dass** ein Abgleichen von jedem Raster des zu bearbeitenden geteilten Gesichtsbilds mit einem Raster eines ersten Rasterwörterbuchs, um eine Vielzahl von verzerrten Rastern zu erlangen, die jedem Raster des zu bearbeitenden Gesichtsbilds entsprechen, die folgenden Schritte umfasst:

> Erfassen von Pixeln von jedem Raster des zu verarbeitenden Gesichtsbilds bzw. von jedem Raster des ersten Rasterwörterbuchs;
> Berechnen eines euklidischen Abstands von Pixeln zwischen jedem Raster des zu verarbeitenden Gesichtsbilds und jedem Raster des ersten Rasterwörterbuchs, jeweils gemäß den erfassten Pixeln; und
> Erfassen von M verzerrten Rastern, die mit jedem Raster des zu verarbeitenden Gesichtsbilds gemäß dem berechneten euklidischen Abstand übereinstimmen.

**3.** Gesichtsentzerrungsverfahren nach Anspruch 1 oder 2, **dadurch gekennzeichnet, dass** ein Abfragen in einem zweiten Rasterwörterbuch einer Vielzahl von klaren Rastern, die der Vielzahl von verzerrten Rastern auf einer Eins-zu-Eins-Basis entsprechen, gemäß den verzerrten Rasten, die folgenden Schritte umfasst:

Erfassen von Koordinaten der verzerrten Raster auf der Gesichtsmaske; und

Abfragen der klaren Raster, die den verzerrten Rastern entsprechen, in dem zweiten Rasterwörterbuch gemäß den Koordinaten.

4. Gesichtsentzerrungsverfahren nach einem der Ansprüche 1 bis 3, **dadurch gekennzeichnet, dass** Entzerrungsraster des zu verarbeitenden Gesichtsbilds gemäß den Rastern den folgenden Schritt umfasst:

Erfassen von Pixeln der klaren Raster; und Verarbeiten von Rastern des zu verarbeitenden Gesichtsbilds, um zu bewirken, dass die Pixel von jedem Raster des zu verarbeitenden Gesichtsbilds die Summe der Pixel der Vielzahl von klaren Rastern sind.

5. Gesichtsentzerrungsverfahren nach einem der Ansprüche 1-4, **dadurch gekennzeichnet, dass** es vor Erfassen des zu verarbeitenden Gesichtsbilds die folgenden Schritte umfasst:

Erfassen der ersten dreidimensionalen Bildbibliothek und der zweiten dreidimensionalen Bildbibliothek, die durch das dreidimensionale Rekonstruktionsverfahren erlangt werden;
Zuweisen von Haltungsparametern des zu verarbeitenden Gesichtsbilds; und
Aufbauen der entsprechenden ersten zweidimensionalen Bildbibliothek und der zweiten zweidimensionalen Bildbibliothek in der ersten dreidimensionalen Bildbibliothek bzw. der zweiten dreidimensionalen Bildbibliothek gemäß den Haltungsparametern.

6. Gesichtsentzerrungsverfahren nach Anspruch 5, **dadurch gekennzeichnet, dass** die Haltungsparameter Winkel ($\theta_x$, $\theta_y$, $\theta_z$) des zu bearbeitenden Gesichtsbilds in dreidimensionalem Raum sind; wobei $\theta_x$ ein Offset-Winkel des zu verarbeitenden Gesichtsbilds in einer x-Richtung ist, $\theta_y$ ein Offset-Winkel des zu verarbeitenden Gesichtsbilds in einer y-Richtung ist, und $\theta_z$ ein Versatzwinkel des zu verarbeitenden Gesichtsbilds in einer z-Richtung ist.

7. Gesichtsentzerrungsvorrichtung, **dadurch gekennzeichnet, dass** sie Folgendes umfasst:

eine erste Erfassungseinheit (41) zum Erfassen eines zu verarbeitenden Gesichtsbilds;
eine Teilungseinheit (42) zum Ausrichten des zu verarbeitenden Gesichtsbilds auf eine Gesichtsmaske und Ausführen von Rasterteilung darüber;
eine Abgleicheinheit (43) zum Abgleichen von jedem Raster des geteilten, zu verarbeitenden Gesichtsbilds mit einem Raster eines ersten Rasterwörterbuchs, um eine Vielzahl von verzerrten Rastern zu erlangen, die jedem Raster des zu verarbeitenden Gesichtsbilds entsprechen, wobei das erste Rasterwörterbuch erlangt wird, indem eine erste zweidimensionale Bildbibliothek gemäß der Gesichtsmaske nach Ausrichtung geteilt wird, und die erste zweidimensionale Bildbibliothek eine zweidimensionale Bildbibliothek von verzerrten Bildern ist, die unter Verwendung einer ersten dreidimensionalen Bildbibliothek aufgebaut wird, die über ein dreidimensionales Rekonstruktionsverfahren erlangt wird;
eine Abfrageeinheit (44) zum Abfragen in einem zweiten Rasterwörterbuch einer Vielzahl von klaren Rastern, die der Vielzahl von verzerrten Rastern auf einer Eins-zu-Eins-Basis entsprechen, gemäß den verzerrten Rastern, wobei das zweite Rasterwörterbuch durch Teilen einer zweiten zweidimensionalen Bildbibliothek gemäß der Gesichtsmaske nach Ausrichtung erlangt wird, die zweite zweidimensionale Bildbibliothek eine zweidimensionale Bildbibliothek von klaren Bildern ist, die unter Verwendung einer zweiten dreidimensionalen Bildbibliothek aufgebaut wird, die über das dreidimensionale Rekonstruktionsverfahren erlangt wird, und die verzerrten Bilder den klaren Bildern auf einer Eins-zu-Eins-Basis entsprechen, **dadurch gekennzeichnet, dass** die erste dreidimensionale Bildbibliothek und die zweite dreidimensionale Bildbibliothek jeweils eine zweidimensionale zylindrische Explosionsansicht mehrerer verzerrter Bilder und entsprechender klarer Bilder sind; und
eine Verarbeitungseinheit (45) zum Erzeugen eines klaren Bilds des zu verarbeitenden Gesichtsbilds gemäß den abgefragten klaren Rastern.

8. Gesichtsentzerrungsvorrichtung nach Anspruch 7, **dadurch gekennzeichnet, dass** die Abgleicheinheit Folgendes umfasst:

eine zweite Erfassungseinheit, um Pixel von jedem Raster des zu verarbeitenden Gesichtsbilds bzw. von jedem Raster des ersten Rasterwörterbuchs zu erfassen;
eine Berechnungseinheit zum Berechnen eines euklidischen Abstands von Pixeln zwischen jedem Raster des zu verarbeitenden Gesichtsbilds und jedem Raster des ersten Rasterwörterbuchs, jeweils gemäß den erfassten Pixeln; und
eine dritte Erfassungseinheit, um M verzerrte Raster zu erfassen, die mit jedem Raster des zu verarbeitenden Gesichtsbilds gemäß dem berechneten euklidischen Abstand übereinstimmen.

9. Bildverarbeitungsvorrichtung, **dadurch gekennzeichnet, dass** sie Folgendes umfasst
mindestens einen Prozessor; und
Speicher in Kommunikationsverbindung mit dem mindestens einen Prozessor;
wobei der Speicher Anweisungen speichert, die von dem einen Prozessor ausgeführt werden können, und die Anweisungen von dem mindestens einen Prozessor ausgeführt werden, sodass der mindestens eine Prozessor das Gesichtsentzerrungsverfahren nach einem der Ansprüche 1-6 ausführt.

10. Nicht flüchtiges, computerlesbares Speichermedium, **dadurch gekennzeichnet, dass** das nicht flüchtige, computerlesbare Speichermedium Computeranweisung speichert, die verwendet wird, um einen Computer zu veranlassen, das Gesichtsentzerrungsverfahren nach einem der Ansprüche 1-6 auszuführen.

## Revendications

1. Procédé de correction de flou de visage, **caractérisé en ce qu'**il comprend les étapes suivantes :

l'acquisition (S11) d'une image de visage à traiter ;
l'alignement (S12) de l'image de visage à traiter sur un masque de visage, et la réalisation d'une division par grille sur celle-ci ;
la mise en correspondance (S13) de chaque grille de l'image de visage divisée à traiter avec une grille d'un premier dictionnaire de grille, de façon à obtenir une pluralité de grilles floues correspondant à chaque grille de l'image de visage à traiter, dans lequel le premier dictionnaire de grille est obtenu en divisant une première banque d'image en deux dimensions selon le masque de visage après alignement, et la première banque d'image en deux dimensions est une banque d'image en deux dimensions d'images floues construites en utilisant une première banque d'images en trois dimensions obtenue par le biais d'un procédé de reconstitution en trois dimensions ;
la demande (S14) dans un second dictionnaire de grille d'une pluralité de grilles claire correspondant à la pluralité de grilles floues sur une base individualisée, selon les grilles floues, dans lequel le second dictionnaire de grille est obtenu en divisant une seconde banque d'image en deux dimensions selon le masque de visage après alignement, la seconde banque d'images en deux dimensions est une banque d'images en deux dimensions d'images claires construites en utilisant une seconde banque d'images en trois dimensions obtenues par le biais du procédé de reconstitution en trois dimensions, et les images floues correspondent aux images claires sur une base individualisée ; et
la génération (S15) d'une image claire de l'image de visage à traiter selon les grilles claires demandées,
**caractérisé en ce que** la première banque d'images en trois dimensions et la seconde banque d'images en trois dimensions sont respectivement une vue éclatée cylindrique en deux dimensions de plusieurs images floues et d'images claires correspondantes.

2. Procédé de correction de flou de visage selon la revendication 1, **caractérisé en ce que** la mise en correspondance de chaque grille de l'image de visage divisée à traiter avec une grille d'un premier dictionnaire de grille de façon à obtenir une pluralité de grilles floues correspondant à chaque grille de l'image de visage à traiter comprend les étapes suivantes :

l'acquisition de pixels de chaque grille de l'image de visage à traiter et de chaque grille du premier dictionnaire de grille, respectivement ;
le calcul d'une distance euclidienne de pixels entre chaque grille de l'image de visage à traiter et de chaque grille du premier dictionnaire de grille, respectivement, selon les pixels acquis ; et
l'acquisition de M grilles floues mises en correspondance avec chaque grille de l'image de visage à traiter selon la distance euclidienne calculée.

3. Procédé de correction de flou de visage, selon la revendication 1 ou 2, **caractérisé en ce que** la demande dans un second dictionnaire de grille d'une pluralité de grilles claires correspondant à la pluralité de grilles floues sur une base individualisée, selon les grilles floues, comprend les étapes suivantes :

l'acquisition de coordonnées des grilles floues sur le masque de visage ; et
la demande de grilles claires correspondant aux grilles floues dans le second dictionnaire de grilles selon les coordonnées.

4. Procédé de correction de flou de visage selon l'une quelconque des revendications 1 à 3, **caractérisé en ce que** les grilles de correction de flou de l'image de visage à traiter selon les grilles claires comprennent les étapes suivantes :

l'acquisition de pixels des grilles claires ; et
le traitement de grilles de l'image de visage à traiter, de façon à amener les pixels de chaque grille de l'image de visage à être traités comme étant la somme des pixels de la pluralité de grilles claires.

5. Procédé de correction de flou du visage selon l'une quelconque des revendications 1 à 4, **caractérisé en ce qu'**il comprend les étapes suivantes avant d'acquérir l'image de visage à traiter :

l'acquisition de la première banque d'images en trois dimensions et de la seconde banque d'images en trois dimensions obtenues par le biais du procédé de reconstitution en trois dimensions ;
l'attribution de paramètres de posture de l'image de visage à traiter ; et
la construction de la première banque d'images en deux dimensions correspondante et de la seconde banque d'images en deux dimensions dans la première banque d'images en trois dimensions et la seconde banque d'images en trois dimensions respectivement, selon les paramètres de posture.

6. Procédé de correction de flou de visage selon la revendication 5, **caractérisé en ce que** les paramètres de posture sont des angles $(\theta x, \theta_y, \theta z)$ de l'image de visage à traiter dans un espace en trois dimensions ; dans lequel $\theta x$ est un angle de décalage de l'image de visage à traiter dans une direction x, $\theta y$ est un angle de décalage de l'image de visage à traiter dans une direction y, $\theta z$ est un angle de décalage de l'image de visage à traiter dans une direction z.

7. Dispositif de correction de flou de visage, **caractérisé en ce qu'**il comprend :

une première unité d'acquisition (41) pour acquérir une image de visage à traiter ;
une unité de division (42), pour aligner l'image de visage à traiter sur un masque de visage, et réaliser une division de grille sur celle-ci ;
une unité de mise en correspondance (43), pour faire correspondre chaque grille de l'image de visage divisée à traiter avec une grille d'un premier dictionnaire de grille, de façon à obtenir une pluralité de grilles floues correspondant à chaque grille de l'image de visage à traiter, dans lequel le premier dictionnaire de grille est obtenu en divisant une première banque d'images en deux dimensions selon le masque de visage après l'alignement, et la première banque d'images en deux dimensions est une banque d'images en deux dimensions d'images floues construite en utilisant une première banque d'images en trois dimensions obtenue par le biais d'un procédé de reconstitution en trois dimensions ;
une unité de requête (44), pour demander dans un second dictionnaire de grille une pluralité de grilles claires correspondant à la pluralité de grilles floues sur une base individualisée, selon les grilles floues, dans lequel le second dictionnaire de grille est obtenu en divisant une seconde banque d'images en deux dimensions selon le masque de visage après l'alignement, la seconde banque d'images en deux dimensions est une banque d'images en deux dimensions d'images claires construite en utilisant une seconde banque d'images en trois dimensions obtenue par le biais du procédé de reconstitution en trois dimensions, et les images floues correspondent aux images claires sur une base individualisée, **caractérisé en ce que** la première banque d'images en trois dimensions et la seconde banque d'images en trois dimensions sont respectivement une vue éclatée cylindrique en deux dimensions de plusieurs images floues et d'images claires correspondantes ; et
une unité de traitement (45), pour générer une image claire de l'image de visage à traiter selon les grilles claires demandées.

8. Dispositif de correction de flou de visage selon la revendication 7, **caractérisé en ce que** l'unité de correspondance comprend :

une deuxième unité d'acquisition, pour acquérir des pixels de chaque grille de l'image de visage à traiter et chaque grille du premier dictionnaire de grille, respectivement ;
une unité de calcul, pour calculer une distance euclidienne de pixels entre chaque grille de l'image de visage à traiter et chaque grille du premier dictionnaire de grille, respectivement, selon les pixels acquis ; et
une troisième unité d'acquisition, pour acquérir M grilles floues mises en correspondance avec chaque grille de l'image de visage à traiter selon la distance euclidienne calculée.

9. Dispositif de traitement d'image, **caractérisé en ce qu'**il comprend
au moins un processeur ; et
une mémoire reliée en communication avec l'au moins un processeur ;
dans lequel la mémoire stocke des instructions exécutables par le processeur, et les instructions sont exécutées par l'au moins un processeur, de sorte que l'au moins un processeur exécute le procédé de correction de flou de visage selon l'une quelconque des revendications 1 à 6.

10. Support de stockage lisible sur ordinateur non-transitoire, **caractérisé en ce que** le support de stockage lisible sur ordinateur non-transitoire stocke des instructions informatiques utilisées pour amener un ordinateur à exécuter le procédé de correction de flou de visage selon l'une quelconque des revendications 1 à 6.

FIG. 1

FIG. 2

FIG. 3

| acquiring a face image to be processed | S11 |

↓

| aligning the face image to be processed onto the face mask, and performing grid division on the same | S12 |

↓

| matching each grid of the divided face image to be processed with a grid of a first grid dictionary, so as to obtain a plurality of blurred grids corresponding to each grid of the face image to be processed, wherein, the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method | S13 |

↓

| querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis | S14 |

↓

| generating a clear image of the face image to be processed according to the queried clear grids | S15 |

FIG. 4

| acquiring a face image to be processed | S21 |

↓

| aligning the face image to be processed onto a face mask, and performing grid division on the same | S22 |

↓

| respectively acquiring the pixel of each grid of the face image to be processed and each grid of the first grid dictionary | S231 |

↓

| calculating a Euclidean distance of pixels between each grid of the face image to be processed and each grid of the first grid dictionary, respectively, according to the acquired pixels | S232 | S23 |

↓

| acquiring M blurred grids matched with each grid of the face image to be processed according to the calculated Euclidean distance | S233 |

↓

| acquiring coordinates of the blurred grids on the face mask | S241 |

↓

| querying the clear grids corresponding with the blurred grids in the second grid dictionary according to the coordinates | S242 | S24 |

↓

| acquiring clear pixels of the grids | S251 |

↓

| processing the grids of the face image to be processed, so that the pixel of each grid of the face image to be processed is the sum of the pixels of the plurality of clear grids | S252 | S25 |

FIG. 5

acquiring the first three-dimensional image library and the second three-dimensional image library obtained via the three-dimensional reconstruction method, and the first three-dimensional image library and the second three-dimensional image library are respectively a two-dimensional cylindrical exploded view of several blurred images and corresponding clear images — S31

allocating posture parameters of the face image to be processed — S32

according to the posture parameters, respectively constructing the corresponding first two-dimensional image library and second two-dimensional image library in the first three-dimensional image library and the second three-dimensional image library — S33

acquiring a face image to be processed — S34

aligning the face image to be processed onto a face mask, and performing grid division on the same — S35

matching each grid of the divided face image to be processed with a grid of a first grid dictionary, so as to obtain a plurality of blurred grids corresponding to each grid of the face image to be processed, wherein the first grid dictionary is obtained by dividing a first two-dimensional image library according to the face mask after alignment, and the first two-dimensional image library is a two-dimensional image library of blurred images constructed using a first three-dimensional image library obtained via a three-dimensional reconstruction method — S36

querying in a second grid dictionary a plurality of clear grids corresponding to the plurality of blurred grids on a one to one basis, according to the blurred grids, wherein the second grid dictionary is obtained by dividing a second two-dimensional image library according to the face mask after alignment, the second two-dimensional image library is a two-dimensional image library of clear images constructed using a second three-dimensional image library obtained via the three-dimensional reconstruction method, and the blurred images correspond to the clear images on a one to one basis — S37

performing deblurring to the grids of the face image to be processed according to clear grids — S38

FIG. 6

first acquisition unit — 41

division unit — 42

matching unit — 43

querying unit — 44

processing unit — 45

FIG. 7

```
                                                                    46
         ┌─────────────────────────────────────────┐
         │          sixth  acquisition  unit        │
         └─────────────────────────────────────────┘
                                                                    47
         ┌─────────────────────────────────────────┐
         │              allocation  unit            │
         └─────────────────────────────────────────┘
                                                                    48
         ┌─────────────────────────────────────────┐
         │              constructing  unit          │
         └─────────────────────────────────────────┘
                                                                    41
         ┌─────────────────────────────────────────┐
         │            first  acquisition  unit       │
         └─────────────────────────────────────────┘
                                                                    42
         ┌─────────────────────────────────────────┐
         │                division  unit            │
         └─────────────────────────────────────────┘

  ┌──────────┬──────────────────────────────────────────┐
  │ matching │  ┌────────────────────────────────────┐  │
  │ unit     │  │     second  acquisition  unit  431 │  │
  │          │  └────────────────────────────────────┘  │       43
  │          │  ┌────────────────────────────────────┐  │
  │          │  │        calculation  unit  432      │  │
  │          │  └────────────────────────────────────┘  │
  │          │  ┌────────────────────────────────────┐  │
  │          │  │     third  acquisition  unit  433  │  │
  │          │  └────────────────────────────────────┘  │
  └──────────┴──────────────────────────────────────────┘

  ┌──────────┬──────────────────────────────────────────┐
  │ querying │  ┌────────────────────────────────────┐  │
  │ unit     │  │     fourth  acquisition  unit  441 │  │       44
  │          │  └────────────────────────────────────┘  │
  │          │  ┌────────────────────────────────────┐  │
  │          │  │        querying  subunit  442      │  │
  │          │  └────────────────────────────────────┘  │
  └──────────┴──────────────────────────────────────────┘

  ┌──────────┬──────────────────────────────────────────┐
  │ processing│ ┌────────────────────────────────────┐  │
  │ unit     │  │       fifth  acquisition  unit  451│  │       45
  │          │  └────────────────────────────────────┘  │
  │          │  ┌────────────────────────────────────┐  │
  │          │  │      processing  subunit  452      │  │
  │          │  └────────────────────────────────────┘  │
  └──────────┴──────────────────────────────────────────┘
```

FIG.8

51

processor

52

memory

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3D vs. 2D: On the importance of registration for hallucinating faces under unconstrained poses. **QU CHENGCHAO et al.** 2015 12th conference on computer and robotic vision. IEEE, 03 June 2015, 139-146